# EUROPÄISCHE PATENTANMELDUNG

(11) **EP 0 523 574 A2**
(43) Veröffentlichungstag der Anmeldung: **20.01.1993**
(21) Anmeldenummer: 92111837.8
(22) Anmeldetag: 11.07.1992
(51) Int. Cl.: B23Q 3/12, B23B 31/02

(54) **Spannvorrichtung für Einzelwerkzeuge**

(30) Priorität: 19.07.1991 DE 4123966
(71) Anmelder: Gebr. Heller Maschinenfabrik GmbH, D-72622 Nürtingen (DE)
(72) Erfinder: Schweizer, Ernst, W-7440 Nürtingen (DE); Kalestra, Horst, W-7441 Neckartenzlingen (DE)
(74) Vertreter: Jackisch-Kohl, Anna-Katharina

(57) **Zusammenfassung**

Die Spannvorrichtung ist für Einzelwerkzeuge vorgesehen und hat ein in einer Spindel (4) untergebrachtes Zugteil (7), mit dem eine Werkzeugaufnahme (8) bzw. ein Werkzeug (26) an der Spindel (4) verspannt werden kann, gegenüber welcher die Werkzeugaufnahme (8) bzw. das Werkzeug (26) zentrierbar ist. Das Zugteil (7) weist einen kegelförmigen Spann- und Zentrierteil (18) auf, der im Bereich außerhalb der Spindel (4) liegt und mit wenigstens einer Kegelfläche (39, 40) zusammenwirkt. Sie ist am Werkzeug (26) bzw. der Werkzeugaufnahme (8) vorgesehen und liegt in einer stirnseitigen Ausnehmung (30) des Werkzeuges (26) bzw. der Werkzeugaufnahme (8). Mit dem Spann- und Zentrierteil (18) wird die Werkzeugaufnahme (8) bzw. das Werkzeug (26) in einem Schritt in bezug auf die Spindel (4) zentriert und gespannt. Da der Spann- und Zentrierteil (18) außerhalb der Spindel (4) liegt und die Kegelflächen (39, 40) in der stirnseitigen Ausnehmung (30) vorgesehen sind, muß das Werkzeug (26) bzw. die Werkzeugaufnahme (8) nicht in die Spindel (4) gesteckt werden. Dadurch kann der Wechselvorgang innerhalb kürzester Zeit durchgeführt werden.

## Beschreibung

Die Erfindung betrifft eine Spannvorrichtung für Einzelwerkzeuge nach dem Oberbegriff des Anspruches 1.

Es sind eine Reihe von Spannvorrichtungen bekannt, mit denen Einzelwerkzeuge unmittelbar oder über Werkzeugaufnahmen mit der Spindel einer Bearbeitungsmaschine verbunden werden können. So zeigt die DE-PS 31 08 439 ein Bohrwerkzeug mit einem Kopfteil, das einen zylindrischen Paßzapfen aufweist, der in eine entsprechende Paßbohrung eines Werkzeughalters eingreift. In der Wandung der Paßbohrung sind diametral einander gegenüberliegend zwei Halteschrauben vorgesehen, deren innen liegende Stirnseiten kegelförmige Vertiefungen aufweisen, in die kegelförmige Enden eines Verbindungsbolzens eingreifen, der in einer Querbohrung des Paßzapfens gelagert ist. Die Achsen der kegelförmigen Enden des Verbindungsbolzens und der kegelförmigen Vertiefungen der Halteschrauben sind versetzt zueinander angeordnet. Dadurch wird durch Hineinschrauben der Halteschrauben in die Paßbohrung der Verbindungsbolzen und damit der Kopfteil gegenüber dem Werkzeughalter axial verspannt.

Infolge der zylindrischen Ausbildung des Paßzapfens müssen er und die zugehörige Paßbohrung äußerst genau gefertigt sein. Um eine Verspannung zu erreichen, muß außerdem eine genaue Zuordnung der Halteschrauben und des Verbindungsbolzens sichergestellt sein, um den Achsversatz, der zum Axialverspannen erforderlich ist, in der gewünschten Weise zu erreichen. Der Wechselvorgang und der Spannvorgang gestalten sich wegen dieser Ausbildung aufwendig und schwierig.

Es ist ferner eine Spannvorrichtung für Einzelwerkzeuge bekannt (DE-OS 35 14 829), bei der die Spindel eine konische Bohrung aufweist, in die ein Kegelschaft des Werkzeuges eingesetzt wird. Innerhalb der Spindel sind radial verschiebbare Keilstücke vorgesehen, die mit Keilnuten in der Spindel zusammenwirken und über eine Nockeneinrichtung mit einer axial hin- und herbewegbaren Zugstange verbunden sind, die axial in der Spindel verläuft. Diese Spannvorrichtung ist ebenfalls konstruktiv aufwendig ausgebildet. Da der Kegelschaft des Werkzeuges axial in die Aufnahmebohrung der Spindel gesteckt werden muß, gestaltet sich der Wechselvorgang wiederum zeitaufwendig. Damit die radial beweglichen Keilstücke die Axialspannung erzeugen, müssen die Keilstücke und die Keilnuten in der Spindel mit entsprechenden Schrägflächen versehen sein, die eine genaue Bearbeitung erfordern und eine exakte Einbaulage der Keilstücke erfordern.

Bei der Spannvorrichtung gemäß der EP-PS 0 275 441 werden wiederum Halteschrauben verwendet, die über kugelartige Zwischenelemente mit Enden eines Verbindungsbolzens zusammenwirken, der in einer Querbohrung des Werkzeughalters gelagert ist. Die kugelförmigen Verbindungselemente haben schräg zur Werkzeugachse liegende Spannflächen, die mit entsprechenden Schrägflächen des Verbindungsbolzens beim Axialverspannen zusammenwirken. Der Verbindungsbolzen ist wiederum in einem zylindrischen Paßstück gelagert, das in eine entsprechende zylindrische Paßbohrung der Spindel gesteckt werden muß. Auch diese Spannvorrichtung ist somit konstruktiv aufwendig ausgebildet, besteht aus mit nur geringen Toleranzen herzustellenden Teilen und erlaubt auch keinen einfachen und schnellen Werkzeugwechsel.

Die DE-OS 38 07 140 zeigt eine Spannvorrichtung, bei der in der Spindel Spannklauen gelagert sind, die mittels einer Zugstange aus einer Freigabe- in eine Spannstellung bewegt werden können. Die Werkzeugaufnahme greift mit einer zylindrischen Paßhülse in die Aufnahmebohrung der Spindel ein. Innenseitig ist die Paßhülse mit nutartigen Ausnehmungen versehen, in welche die Spannklauen eingreifen und dadurch eine axial gerichtete Anpreßkraft zwischen der Spindel und der Werkzeugaufnahme erzeugen. Um die Schwenkbewegung der Spannklauen zu erzeugen, ist ein zusätzlicher Schubkonus in der Spindel erforderlich. Diese Spannvorrichtung besteht somit wiederum aus einer Vielzahl von Teilen. Infolge der zylindrischen Paßhülse der Werkzeugaufnahme ist eine genaue Fertigung der Paßhülse und der Aufnahmebohrung der Spindel notwendig. Der Wechselvorgang ist schwierig, weil die Paßhülse der Werkzeugaufnahme exakt in die Aufnahmebohrung der Spindel gesteckt werden muß. Wegen der Paßhülse muß - ebenso wie bei den zuvor beschriebenen Spannvorrichtungen - ein größeres Einführungsspiel vorhanden sein, damit die Paßhülse leicht in die Aufnahmebohrung der Spindel gesteckt werden kann.

Die EP-PS 0 295 315 zeigt eine Spannvorrichtung, bei der in der Wandung der zylindrischen Aufnahmebohrung der Spindel radial liegende Halteschrauben vorgesehen sind, die mit kegelförmigen Schraubenköpfen in kegelförmige Vertiefungen in den Enden eines quer zur Achse der Spindel gelagerten Spannstückes eingreifen. Durch Anzug der Halteschrauben wird über die Kegelflächen die Werkzeugaufnahme axial an der Spindel verspannt. Diese Spannvorrichtung ist ebenfalls konstruktiv sehr aufwendig ausgebildet und besteht aus einer großen Zahl von Einzelteilen. Zudem ist infolge des Steckvorganges der Wechselvorgang zeitaufwendig.

Bei der Spannvorrichtung gemäß der DE-PS 38 14 550 hat die Werkzeugaufnahme einen kegelförmigen oder zylindrischen Zentrieransatz, mit dem sie in eine entsprechende Aufnahmebohrung der Spindel eingreift. In der Spindel ist mittig eine axial verlaufende Zugstange vorgesehen, mit der Spannklauen translatorisch radial nach außen verschoben werden können. Dadurch wird die Werkzeugaufnahme über den Zentrieransatz axial fest gegen die Spindel gezogen. Um die translatorische Bewegung der einzelnen Spannklauen zu erreichen, ist eine komplizierte Formgebung der Spannklauen, der Zugstange und der Aufnahme der Spindel erforderlich. Auch ist wiederum eine Vielzahl von Bauteilen für die Spannvorrichtung notwendig. Da die Werkzeugaufnahme mit dem Zentrieransatz in die Aufnahmebohrung der Spindel gesteckt werden muß, benötigt der Wechselvorgang erhebliche Zeit.

Die DE-OS 38 31 666 zeigt eine Spannvorrichtung, bei der in eine Aufnahmebohrung der Spindel ein Ansatz der Werkzeugaufnahme gesteckt wird. In der Spindel sind eine Anzugstange und eine Spannstange axial verschiebbar gelagert, mit denen die Werkzeugaufnahme axial an der Spindel verspannt werden kann. Zusätzlich sind Spannelemente vorgesehen, mit denen der in die Aufnahmebohrung der Spindel ragende Ansatz der Werkzeugaufnahme erfaßt wird. Diese bekannte Spannvorrichtung besteht wiederum aus einer Vielzahl von Bauteilen, ist darum teuer in der Herstellung und benötigt eine verhältnismäßig lange Wechselzeit.

Eine andere bekannte Spannvorrichtung (DE-OS 38 34 192) hat wiederum eine Vielzahl von in der Spindel untergebrachten Spannelementen, die mittels einer in der Spindel axial verschiebbaren Betätigungsstange zum Ergreifen und Spannen eines in die Bohrung der Spindel ragenden Ansatzes der Werkzeugaufnahme dienen. Die Wandung der Aufnahmebohrung der Spindel sowie der Mantel des Ansatzes der Werkzeugaufnahme sind mit axial hintereinander liegenden zylindrischen Passungsflächen versehen. Durch diese zylindrischen Passungsflächen haben der Ansatz der Werkzeugaufnahme und die Aufnahmebohrung der Spindel eine komplizierte Formgebung, die nur aufwendig und kostspielig herzustellen ist. Die einzelnen zylindrischen Flächen müssen zudem mit sehr engen Toleranzen hergestellt werden. Da die Werkzeugaufnahme mit ihrem Ansatz in die Aufnahmebohrung der Spindel gesteckt werden muß, sind kurze Wechselzeiten nicht zu erreichen.

Auch bei einer anderen bekannten Spannvorrichtung (DE-OS 39 04 259) wird die Werkzeugaufnahme mit einem Ansatz in eine Aufnahmebohrung der Spindel gesteckt und mit Spannklauen gehalten. Sie werden durch eine axial wirkende Federeinrichtung in Form eines Tellerfederpaketes ständig so vorgespannt, daß die Klauenabschnitte der Spannklauen radial nach innen gedrückt werden. Mit einer radialen Stellschraube werden die Spannklauen gegen die Kraft der Federeinrichtung radial nach außen geschwenkt, um den Ansatz der Werkzeugaufnahme zu halten. Infolge der Spannklauen und der Federeinrichtung ist wiederum eine Vielzahl von Bauteilen für die Spannvorrichtung notwendig.

Da die Werkzeugaufnahme mit ihrem Ansatz in die Bohrung der Spindel axial gesteckt werden muß, lassen sich kurze Wechselzeigen wiederum nicht erreichen.

Es ist ferner eine Spannvorrichtung bekannt (DE-OS 39 39 227), bei der die Werkzeugaufnahme mit einer zylindrischen Spannhülse in die Aufnahmebohrung der Spindel ragt und in ihr mit Spreizhebeln gehalten wird, die durch eine Zugstange und einen Zugbolzen in ihre Haltestellung verstellt werden. Zur Führung von Zugbolzen und Zugstange ist außerdem in der Spindel eine Führungsbuchse untergebracht. Durch die Vielzahl von Bauteilen ist die Spannvorrichtung konstruktiv aufwendig ausgebildet. Der axiale Steckvorgang erschwert das Auswechseln der Werkzeugaufnahmen und führt auch zu längeren Wechselzeiten.

Es ist schließlich eine Spannvorrichtung bekannt (DE-OS 40 24 645), bei der der in die zylindrische Aufnahmebohrung der Spindel ragende zylindrische Paßzapfen der Werkzeugaufnahme eine Querbohrung aufweist, in der ein quer zur Achse des Paßzapfens liegender Klemmbolzen verschiebbar untergebracht ist. Sein eines kegelförmiges Ende ragt in eine kegelförmige Vertiefung einer Halteschraube, während sein anderes Ende eine kegelförmige Vertiefung aufweist, in die eine kegelförmige Spitze einer weiteren Halteschraube ragt. Die Achsen der beiden diagonal einander gegenüberliegenden Halteschrauben liegen fluchtend zueinander und mit Abstand zur Achse des Klemmbolzens. Wird die eine der beiden Halteschrauben nach innen gedreht, wird somit über die aneinanderliegenden Kegelflächen der Halteschrauben und des Klemmbolzens die axiale Verspannung zwischen der Werkzeugaufnahme und der Spindel erreicht. Der Achsversatz zwischen Klemmbolzen und Halteschrauben erfordert eine genaue Fertigung des Paßzapfens der Werkzeugaufnahme sowie der Lage der Bohrungen zur Aufnahme der Halteschrauben, wodurch die Spannvorrichtung nur kostenaufwendig herzustellen ist. Infolge des Steckvorganges ist zudem die Wechselzeit verhältnismäßig lang.

Die Erfindung liegt die Aufgabe zugrunde, die gattungsgemäße Spannvorrichtung so auszubilden, daß sie aus nur wenigen Teilen besteht, die einfach und kostengünstig hergestellt werden können und die so ausgebildet sind, daß die Werkzeugaufnahme bzw. das Werkzeug innerhalb kürzester Zeit gewechselt werden kann.

Diese Aufgabe wird bei der gattungsgemäßen Spannvorrichtung erfindungsgemäß mit den kennzeichnenden Merkmalen des Anspruches 1 gelöst.

Bei der erfindungsgemäßen Spannvorrichtung wird durch den kegelförmigen Spann- und Zentrierteil des Zugteiles die Werkzeugaufnahme bzw. das Werkzeug in einem Schritt in bezug auf die Spindel zentriert und verspannt. Da der Spann- und Zentrierteil des Zugteiles außerhalb der Spindel liegt und die Kegelflächen in einer stirnseitigen Ausnehmung des Werkzeuges bzw. der Werkzeugaufnahme vorgesehen sind, muß das Werkzeug bzw. die Werkzeugaufnahme nicht in die Spindel gesteckt werden. Dementsprechend ist das Werkzeug bzw. die Werkzeugaufnahme nicht mit einem Ansatz versehen, der in eine Aufnahmebohrung der Spindel gesteckt werden muß. Vielmehr wird das Werkzeug bzw. die Werkzeugaufnahme quer zur Achse des Zugteils auf den Spann- und Zentrierteil aufgeschoben, der anschließend lediglich axial zurückgefahren wird, wodurch über die aneinanderliegenden Kegelflächen das Werkzeug bzw. die Werkzeugaufnahme zentriert und gespannt wird. Da das Werkzeug bzw. die Werkzeugaufnahme nicht in eine Aufnahmebohrung der Spindel gesteckt werden muß, kann der Wechselvorgang innerhalb kürzester Zeit durchgeführt werden. Insbesondere kann in der Spindel der herkömmliche aufwendige Spannmechanismus mit verstell- bzw. verschwenkbaren Spannelementen entfallen, so daß sich die erfindungsgemäße Spannvorrichtung äußerst kostengünstig herstellen läßt. Die Spannvorrichtung stellt eine optimierte Schnittstelle für rotierende und für stehende Werkzeuge dar. Die Spannvorrichtung eignet sich prinzipiell für Bearbeitungszentren, Dreheinheiten, Transferstraßen und Sondermaschinen. Bestehende Maschinen können auf die Spannvorrichtung einfach umgerüstet werden. Die erfindungsgemäße Spannvorrichtung erfüllt alle Anforderungen hinsichtlich Stabilität, Positionierungsgenauigkeit, Unempfindlichkeit gegenüber Verschmutzung, zwängungsfreies Fügen, kurze Werkzeugwechselzeit und Automatisierbarkeit des Werkzeugwechsels.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: in einem Längsschnitt eine erfindungsgemäße Spannvorrichtung für Einzelwerkzeuge,
- Fig. 2: in vergrößerter Darstellung einen Schnitt längs der Linie II-II in Fig. 3,
- Fig. 3: eine Ansicht längs der Linie III-III in Fig. 2,
- Fig. 4: eine Ansicht längs der Linie IV-IV in Fig. 2,
- Fig. 5: einen Schnitt längs der Linie V-V in Fig 3,
- Fig. 6: einen Schnitt längs der Linie VI-VI in Fig. 3.

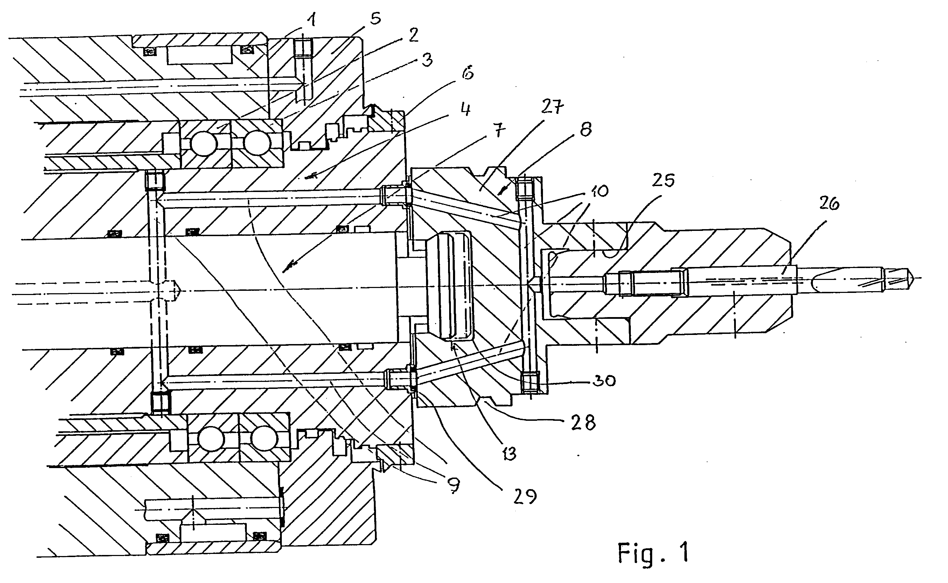

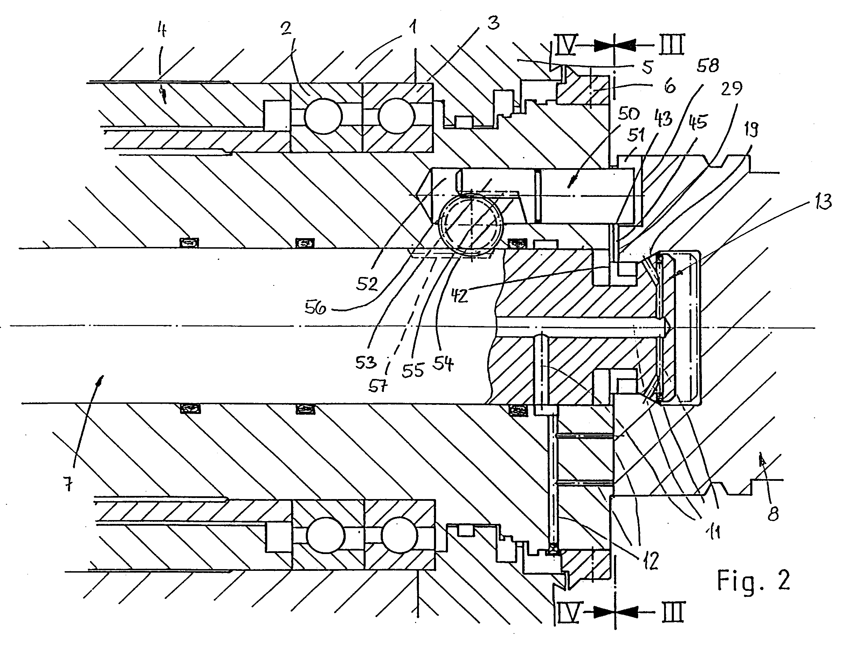

Fig. 1 zeigt in einem Längsschnitt einen Teil eines Gehäuses 1 einer Bearbeitungsmaschine, einer Bearbeitungseinheit oder dgl. Im Gehäuse 1 ist über Lager 2, 3 eine Arbeitsspindel 4 drehbar gelagert. Auf die Stirnseite des Gehäuses 1 ist ein Deckel 5 gesetzt, durch den die Arbeitsspindel 4 nach außen ragt. Auf dem überstehenden Ende der Arbeitsspindel 4 sitzt ein Schleudering 6, der in bekannter Weise geringen Abstand von der Stirnseite des Deckels 5 hat (Fig. 2). In der Arbeitsspindel 4 ist zentrisch eine axiale Zugstange 7 untergebracht, die in bekannter Weise zum Spannen und Positionieren einer Werkzeugaufnahme 8 axial verschiebbar ist.

Die Arbeitsspindel 4 ist mit Kühlmittelbohrungen 9 versehen, die bei angesetzter Werkzeugaufnahme 8 mit entsprechenden Kühlmittelbohrungen 10 der Werkzeugaufnahme in Verbindung stehen. Die Zugstange 7 ist mit Druckluftbohrungen 11 versehen (Fig. 2), die in noch zu beschreibender Weise mit Druckluftbohrungen 12 in der Arbeitsspindel 4 verbunden sind.

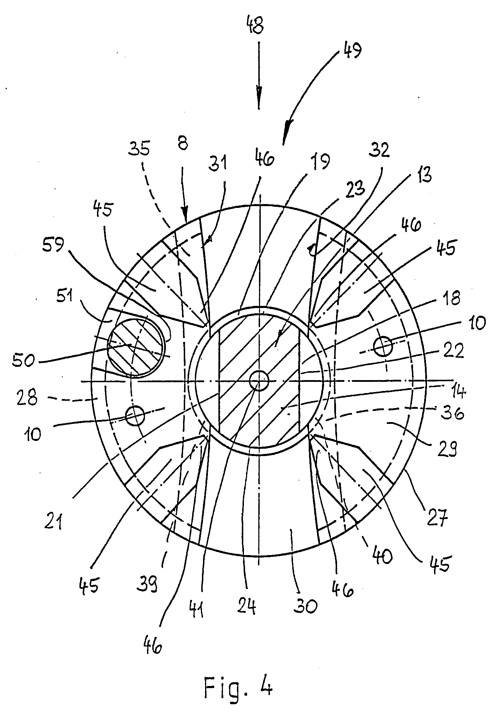

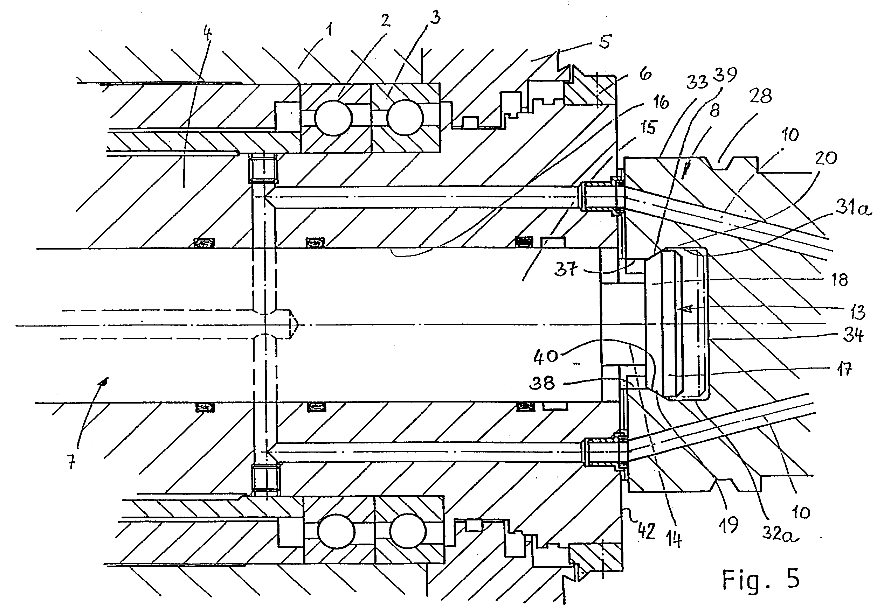

Die Zugstange 7 ist am freien Ende mit einem Spann- und Zentrierkopf 13 versehen, mit dem die Werkzeugaufnahme 8 in einem Arbeitsgang positioniert und gespannt wird. Er ist über einen Hals 14 (Fig. 4 und 5) mit einem Zugstangenkörper 15 verbunden, der abgedichtet an der Innenwandung einer die Arbeitsspindel 4 axial durchsetzenden und mittig angeordneten Bohrung 16 anliegt. Der Spann- und Zentrierkopf 13, der Hals 14 und der Zugstangenkörper 15 sind vorteilhaft einstückig miteinander ausgebildet.

Der Spann- und Zentrierkopf hat stirnseitig einen zylindrischen Endteil 17, der stirnseitig angefast ist. Der Endteil 17 ist über einen kegelstumpfförmigen Positionier- und Spannteil 18 mit dem Hals 14 verbunden. Der Positionier- und Spannteil 18 verjüngt sich in Richtung auf den Hals 14 (Fig. 5). Der Positionier- und Spannteil 18 hat eine kegelförmige Spannfläche 19, die am Übergang zur zylindrischen Mantelfläche 20 des Endteiles 17 ihren größten Durchmesser hat.

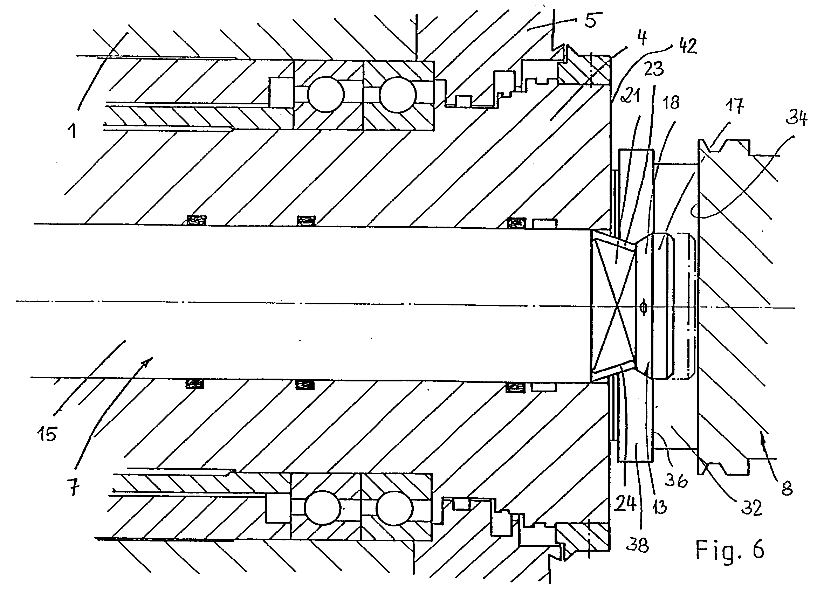

Wie Fig. 4 zeigt, hat der Hals 14 zwei zueinander parallele ebene Seiten 21 und 22, deren Abstand voneinander kleiner ist als der Durchmesser des Kopfes 13. Die ebenen Seiten 21, 22 erstrecken sich vom Kopf 13 bis zum Zugstangenkörper 15 (Fig. 5). Wie Fig. 6 zeigt, haben die ebenen Seiten 21, 22 trapezförmigen Grundriß. Wie den Fig. 4 und 6 weiter entnommen werden kann, sind die zueinander parallelen Seiten 21 und 22 durch Teilkegelmantelflächen 23 und 24 miteinander verbunden. Sie liegen auf dem Mantel eines gedachten Kegels, der sich vom Positionier- und Spannteil 18 aus in Richtung auf den Zugstangenkörper 15 erweitert.

Die Werkzeugaufnahme 8 hat eine Aufnahmeöffnung 25 (Fig. 1), in der in bekannter Weise das Werkzeug 26 gehalten ist. Die Werkzeugaufnahme 8 hat einen im Durchmesser erweiterten Zylinderteil 27, in dessen Mantelfläche eine Greifernut 28 für den Greifer einer (nicht dargestellten) Wechseleinrichtung vorgesehen ist.

Der Zylinderteil 27 weist in seiner der Arbeitsspindel 4 zugewandten Stirnseite 29 eine nutartige Ausnehmung 30 auf, die anhand der Fig. 4 bis 6 im einzelnen beschrieben wird.

Die Ausnehmung 30 erstreckt sich diagonal (Fig. 4) und wird, in Achsrichtung der Werkzeugaufnahme 8 gemäß Fig. 4 gesehen, von zwei teilkreisförmig gekrümmten Seitenflächen 31 und 32 begrenzt, die entgegengesetzt zueinander gekrümmt verlaufen, so daß die Breite der Ausnehmung 30 von der zylindrischen Mantelfläche 33 des Zylinderteils 27 aus abnimmt. Wie aus Fig. 5 hervorgeht, ist der Boden 34 der Ausnehmung 30 eben. An ihn schließen die Seitenflächenabschnitte 31a und 32a senkrecht an. Sie gehen mit Abstand vom Boden 34 in senkrecht abstehende und in Richtung zueinander verlaufende Schulterflächen 35 und 36 über, an die senkrecht zur Stirnseite 29 der Werkzeugaufnahme 8 verlaufende teilkreisförmig gekrümmte Endflächenabschnitte 37 und 38 anschließen. Die Schulterflächen 35 und 36 haben vom Boden 34 der Ausnehmung 30 einen Abstand, der größer ist als die Höhe des Spann- und Zentrierkopfes 13.

Der Hals 14 der Zugstange 7 ist, wie Fig. 4 zeigt, schmaler als die Ausnehmung 30, so daß die Werkzeugaufnahme 8 seitlich auf den Spann- und Zentrierkopf 13 aufgeschoben werden kann, wenn die Zugstange 7 axial ausgefahren ist und ihr Kopf 13 die in Fig. 6 durch strichpunktierte Linien dargestellte Lage einnimmt. Dann befindet sich der Spann- und Zentrierkopf 13 im Bereich zwischen dem Boden 34 und den Schulterflächen 35 und 36. In dieser Stellung der Zugstange 7 läßt sich die Werkzeugaufnahme 8 seitlich auf den Spann- und Zentrierkopf 13 aufschieben. Da sich die Ausnehmung 30 in Richtung auf ihre beiden Enden stetig erweitert, ist ein einfaches Aufschieben der Werkzeugaufnahme sichergestellt. Der Abstand zwischen dem Boden 34 und den Schulterflächen 35, 36 ist so groß, daß die Werkzeugaufnahme 8 berührungsfrei auf den Spann- und Zentrierkopf 13 geschoben werden kann. In halber Länge sind die Schulterflächen 35 und 36 jeweils mit einer Teilkegelfläche 39 und 40 (Fig. 4 und 5) versehen, die auf dem Mantel eines gedachten Kegels liegen, dessen Achse die Achse 41 des Zylinderteils 27 der Werkzeugaufnahme 8 bildet. Dieser gedachte Kegel hat den gleichen Kegelwinkel wie der die Spannfläche 19 aufweisende Kegel. Sobald die Werkzeugaufnahme 8 so weit auf den Spann- und Zentrierkopf 13 geschoben ist, daß die Spannfläche 19 in Höhe der Teilkegelflächen 39 und 40 liegt, wird die Zugstange 7 axial zurückgezogen. Die Spannfläche 19 gelangt dann auf die beiden Teilkegelflächen 39 und 40, wodurch die Werkzeugaufnahme 8 fest gegen die Arbeitsspindel 4 gezogen und gespannt und infolge der Kegelflächen gleichzeitig auch positioniert wird. Da die Werkzeugzentrierung über die Teilkegelfläche 39, 40 und die Kegelspannfläche 19 erfolgt, muß die Werkzeugaufnahme 8 keinen Schaft aufweisen, der axial in die Arbeitsspindel 4 eingeführt werden muß. Dadurch ist eine axiale Einfahr- bzw. Ausfahrbewegung der Werkzeugaufnahme 8 nicht erforderlich. Sie wird lediglich radial auf den Spann- und Zentrierkopf 13 geschoben. Die Werkzeugwechselzeit ist dadurch sehr gering.

Die axial durch die Arbeitsspindel 4 verlaufende Zugstange 7 erhält nur ein sehr geringes Bewegungsspiel, um ein einwandfreies Aus- und Einfahren der Zugstange sicherzustellen. Durch das sehr geringe Bewegungsspiel der Zugstange 7 in der Arbeitsspindel 4 in Verbindung mit dem radialen Aufschieben der Werkzeugaufnahme 8 wird eine hohe Wechselgenauigkeit sichergestellt. Durch den beschriebenen konischen Zentriersitz über die Kegelflächen 19, 39 und 40 wird das Passungsspiel von Werkzeugaufnahme 8 und Arbeitsspindel 4 sehr einfach eleminiert. Dadurch wird die sehr hohe Wechselgenauigkeit noch unterstützt.

Die Stirnseite 42 (Fig. 2) der Arbeitsspindel 4 ist mit über ihren Umfang verteilt angeordneten Erhöhungen 43 versehen, die radial angeordnet sind und in Richtung auf die Bohrung 16 in einer Spitze 44 auslaufen. Im Ausführungsbeispiel sind vier Erhöhungen 43 vorgesehen, die in Winkelabständen von jeweils 90° zueinander angeordnet sind. Sie sind schmal ausgebildet, so daß die zwischen ihnen liegenden Vertiefungen sich über einen Winkelbereich von jeweils etwa 60° bis 70° erstrecken. Die Stirnseiten der Erhöhungen 43 sind eben und bilden Spannflächen, an denen entsprechende Erhöhungen der Werkzeugaufnahme 8 zur Anlage kommen. In die Erhöhungen 43 münden jeweils zwei der Druckluftbohrungen 12. In zwei der Vertiefungen münden diametral einander gegenüberliegend die Kühlmittelbohrungen 9, die beim Ansetzen der Werkzeugaufnahme 8 in bekannter Weise mit den weiterführenden Kühlmittelbohrungen 10 in der Werkzeugaufnahme verbunden werden.

Die Stirnseite 29 der Werkzeugaufnahme 8 ist mit flächengleichen Erhöhungen 45 (Fig. 4) versehen, die ebenfalls radial angeordnet sind und in Richtung auf die Achse der Werkzeugaufnahme 8 in einer Spitze 46 auslaufen. Die Erhöhungen 45 enden mit geringem Abstand von den Seitenflächen 31 und 32 der Ausnehmung 30. Die Stirnseiten der Erhöhungen 45 sind eben. Die Erhöhungen 45 liegen bei angesetzter Werkzeugaufnahme 8 auf den Erhöhungen 43 der Arbeitsspindel 4 auf und werden durch den Spann- und Zentrierkopf 13 der Zugstange 7 fest gegen die Erhöhungen gezogen. Die Erhöhungen 45 liegen in einem Winkelabstand von jeweils etwa 90° und sind schmal ausgebildet. Der zwischen den Erhöhungen 45 liegende Bereich erstreckt sich jeweils über einen Winkelbereich von etwa 60 bis 70°. Zwischen die Erhöhungen 45 münden in die Stirnseite 29 der Werkzeugaufnahme 8 die Kühlmittelbohrungen 10, die diametral einander gegenüberliegend angeordnet sind.

Wie Fig. 2 zeigt, mündet ein Teil der Druckluftbohrungen 11 der Zugstange 7 in die kegelförmige Spannfläche 19 des Spann- und Zentrierkopfes 13.

Über die Erhöhungen 43 und 45 wird die Werkzeugaufnahme 8 über die beschriebene Zentrierspannung über eine breite Planfläche abgestützt, wodurch höchste Steifigkeit erreicht wird, die sich besonders vorteilhaft bei der Schwerzerspanung auswirkt. Die Erhöhungen 43 und 45 werden während des Spannvorganges mit Druckluft abgeblasen. Aus den Druckluftbohrungen 12 tritt die Druckluft aus und bläst evtl. vorhandene Schmutzpartikel von den Erhöhungen 43 und 45, so daß sich kein Schmutz an den Planflächen festsetzen kann. Die Druckluftzuführung kann separat gesteuert werden, um eine optimale Säuberung der Planflächen zu erreichen.

Da der Spann- und Zentrierkopf 13 zylindrisch und damit rotationssymmetrisch ausgebildet ist, ergibt sich eine einfache Druckluftversorgung über kleine Bohrungen 11, die in die Kegelfläche 19 des konischen Positionier- und Spannteils 18 münden. Bei Annäherung des Spann- und Zentrierkopfes 13 an die Teilkegelflächen 39, 40 der Werkzeugaufnahme 8 wird im Bereich der Passungsflächen 19, 39 und 40 eine düsenartige Druckluftströmung zwischen den einander nähernden Passungsflächen erzeugt, wodurch auch kleinste Schmutzpartikel zuverlässig entfernt werden. Der Positionierund Spannteil 18 hat nur eine geringe Höhe, so daß die Gefahr des Partikeleinschlusses aufgrund dieses kurzen Kegels ohnehin minimal ist.

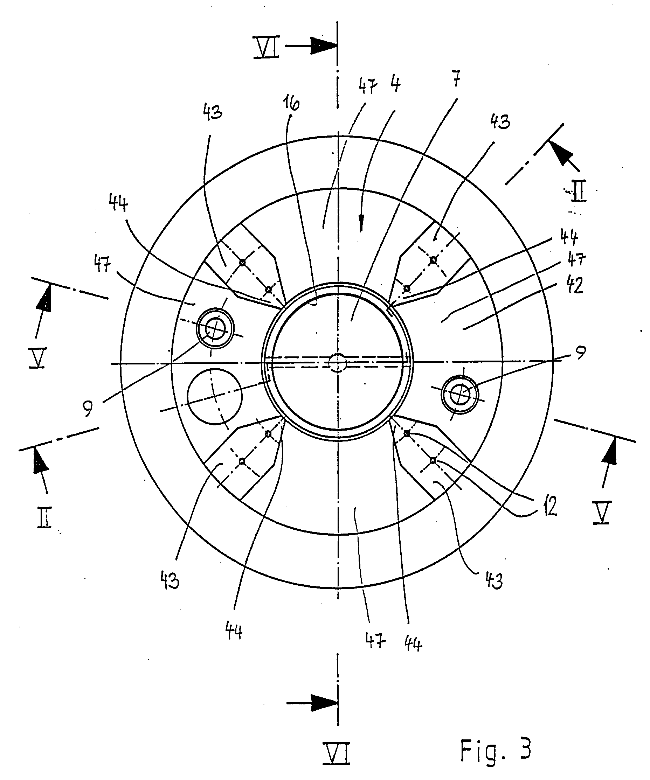

Die Stirnseite 42 der Arbeitsspindel 4 ist durch die Erhöhungen 43 in ringflächenartige Segmente 47 (Fig. 3) unterteilt, so daß die sauber zu haltende Planfläche, die durch die Stirnseite der Erhöhungen 43 gebildet wird, stark reduziert wird. Da in die Stirnseite jeder Erhöhung 43 zwei Druckluftbohrungen 12 münden (Fig. 3), wird beim Spannvorgang ebenfalls eine düsenartige Druckluftströmung zwischen den einander sich nähernden Erhöhungen 43 und 45 erzeugt, so daß eine zuverlässige Säuberung der Stirnseiten der Erhöhungen 43, 45 sichergestellt ist. Die zwischen den Erhöhungen 43 und 45 befindlichen Segmente 47 wirken als Schmutzkammern.

Da die Werkzeugaufnahme 8 über ihre Erhöhungen 45 großflächig an der Arbeitsspindel 4 abgestützt und mittels des Spann- und Zentrierkopfes 13 der Zugstange 7 zentrierend gespannt wird, ergibt sich eine hohe statische und dynamische Steifigkeit. Der konische Spann- und Zentrierkopf 13 gewährleistet eine hohe radiale und axiale Positioniergenauigkeit der Werkzeugaufnahme 8. Mit dem Spann- und Zentrierkopf 13 ist außerdem ein zwängungs- und verkantungsfreies Fügen gewährleistet, so daß die beschriebene Spann- und Zentriervorrichtung auch für große Werkzeuggewichte hervorragend geeignet ist. Die Werkzeugaufnahme 8 kann radial zum Spann- und Zentrierkopf 13 in Pfeilrichtung 48 (Fig. 4) oder auch in einem Bogen gemäß Pfeilrichtung 49 in Fig. 4 auf den Spann- und Zentrierkopf 13 geschoben werden. Aufgrund der an den Enden sich erweiternden Ausnehmung 30 läßt sich die Werkzeugaufnahme 49 ohne weiteres auch in einer Bogenbewegung auf den Spann- und Zentrierkopf 13 schieben.

Da die Werkzeugaufnahme 8 nicht axial in die Arbeitsspindel 4, sondern lediglich radial auf deren Spann- und Zentrierkopf 13 aufgeschoben wird, ergeben sich sehr kurze Werkzeugwechselzeiten infolge des Wegfalls der Aushubbewegung. Die Werkzeugaufnahme 8 hat keinen Steilkegel bzw. keinen Zentrierschaft, wodurch sie auch nur ein geringes Gewicht hat. Außerdem wird dadurch die Baulänge der Werkzeugaufnahme 8 verringert, und für die Werkzeugaufnahme wird auch nur ein kleiner Rohling benötigt. Die Werkzeugaufnahme 8 ist infolge der beschriebenen Ausbildung unempfindlich gegen Verschmutzung. Die durch die Stirnseiten der Erhöhungen 43, 45 gebildete Planfläche läßt sich einfach säubern. Insbesondere ist in der Arbeitsspindel 4 keine Aufnahmebohrung für einen Steilkegel oder Zentrierschaft der Werkzeugaufnahme 8 notwendig, so daß das Problem der Säuberung einer solchen Aufnahmebohrung nicht mehr auftritt. Am Umfang des konischen Positionier- und Spannteiles 18 erfolgt eine gleichmäßige Krafteinleitung. Das Spannen erfolgt von innen nach außen. Die Fliehkraft wird durch die vorgespannte, axial bewegliche Zugstange 7 ausgeglichen. Der Spann- und Zentrierkopf 13 sowie die Werkzeugaufnahme 8 sind im wesentlichen rotationssymmetrische Teile, die einfach hergestellt werden können. Der kurze Kraftschluß der Spannelemente verstärkt zudem die Systemsteifigkeit. Die Zugstange 7 muß nur um einen geringen Weg axial verschoben werden, um die Werkzeugaufnahme 8 an der Arbeitsspindel 4 zu verspannen und zu positionieren. Beim Zurückziehen der Zugstange 7 wird die Werkzeugaufnahme 8 durch den Spann- und Zentrierkopf 13 gleichzeitig gespannt und positioniert. Über die Erhöhungen 43 und 45 ist außerdem eine definierte Plananlage der Werkzeugaufnahme zur Abstützung des Werkzeuges gewährleistet. Die Längslage der Werkzeugaufnahme 8 ergibt sich automatisch durch diese Plananlage.

Zur Drehmitnahme der Werkzeugaufnahme 8 ist in der Arbeitsspindel 4 wenigstens ein Mitnehmer 50 gelagert (Fig. 2), der bei verspannter Werkzeugaufnahme 8 formschlüssig in eine stirnseitig offene Nut 51 der Werkzeugaufnahme 8 ragt. Sie ist, wie sich aus den Fig. 2 und 4 ergibt, zur Mantelfläche des Zylinderteils 27 der Werkzeugaufnahme 8 offen. Der Mitnehmer 50 ist axial verschiebbar in einer achsparallelen Bohrung 52 der Arbeitsspindel 4 gelagert und als Zylinderbolzen ausgebildet. Der in der Bohrung 52 liegende Endteil 53 des Mitnehmers 50 ist mit einer ebenen Abflachung 54 versehen, die vorteilhaft eine Diametralebene des Mitnehmers 50 bildet. Die Abflachung 54 ist mit einer Verzahnung 55 versehen, in die ein Zahnrad 56 eingreift, das drehbar in der Arbeitsspindel 4 gelagert ist und dessen Drehachse senkrecht zur Spindelachse liegt. Die Zugstange 7 ist an ihrer Außenseite mit einer Verzahnung 57 versehen, in die das Zahnrad 56 ebenfalls eingreift. Die Verzahnungen 55 und 57 sind so vorgesehen, daß bei zurückgezogener Zugstange 7 die beiden Verzahnungen mit ihren voneinander abgewandten Enden in das Zahnrad eingreifen. Dadurch wird erreicht, daß beim Ausfahren der Zugstange 7 der Mitnehmer 50 zwangläufig in die Arbeitsspindel 4 zurückgezogen wird, während umgekehrt beim Zurückziehen der Zugstange 7 der Mitnehmer 50 ausgefahren wird. Wird darum zum Lösen der Werkzeugaufnahme 8 die Zugstange 7 in die mit strichpunktierten Linien dargestellte Lage ausgefahren (Fig. 2), wird über das Zahnrad 56 der Mitnehmer 50 in die Arbeitsspindel 4 zurückgeschoben, so daß die Werkzeugaufnahme 8 radial vom Spann- und Zentrierkopf 13 geschoben werden kann. In dieser Lage läßt sich die Werkzeugaufnahme 8 einwandfrei auf den Spann- und Zentrierkopf 13 schieben. Beim Spannvorgang wird dann die Zugstange 7 in der beschriebenen Weise zurückgezogen, wobei der Mitnehmer 50 entgegengesetzt aus der Arbeitsspindel 4 ausgefahren wird und in die Nut 51 der Werkzeugaufnahme 8 eingreift. Dadurch ist die Werkzeugaufnahme 8 in Drehrichtung formschlüssig mit der Arbeitsspindel 4 verbunden. Der von der Stirnseite 29 der Werkzeugaufnahme 8 abgewandte Boden 58 der Nut 51 ist eben und radial in bezug auf die Achse der Werkzeugaufnahme 8 (Fig. 2). Die der Mantelfläche des Zylinderteils 27 gegenüberliegende Seitenwand 59 (Fig. 4) der Nut 51 verläuft teilzylindrisch und hat vorteilhaft gleichen Krümmungsradius wie der Mitnehmer 50. In der Eingriffsstellung hat der Mitnehmer 50, wie Fig. 2 zeigt, geringfügigen Abstand vom Boden 58 der Nut 51. Wie Fig. 4 zeigt, ist die Nut 51 in einem der ringflächenartigen Segmente 47 in der Stirnseite der Werkzeugaufnahme 8 vorgesehen.

Die beschriebene Spannvorrichtung eignet sich für Bearbeitungszentren, Dreheinheiten, Transferstraßen und Sondermaschinen. Auch schon bestehende Werkzeugmaschinen können auf diese Spannvorrichtung einfach umgerüstet werden. Die Werkzeugaufnahme 8 läßt sich hervorragend für einen automatischen Wechselvorgang verwenden. Die Werkzeugaufnahme 8 kann zur Halterung des Werkzeuges 26 sämtliche gebräuchlichen Spann- und Halterungseinrichtungen aufweisen, wie hydraulische Drehspannfutter, Spannzangenfutter, Ansteckfräsdorn, ABS-Aufnahme und dgl. Handelsübliche Fräser lassen sich mit einer Adapterplatte ohne Schrauben an der Arbeitsspindel 4 befestigen, so daß ein sehr schneller Werkzeugwechsel möglich ist.

## Patentansprüche

1. Spannvorrichtung für Einzelwerkzeuge, mit einem in einer Spindel untergebrachten Zugteil, mit dem eine Werkzeugaufnahme bzw. ein Werkzeug an der Spindel verspannbar ist, gegenüber welcher die Werkzeugaufnahme bzw. das Werkzeug zentrierbar ist,
dadurch gekennzeichnet, daß das Zugteil (7) einen kegelförmigen Spann- und Zentrierteil (18) aufweist, der im Bereich außerhalb der Spindel (4) liegt und mit wenigstens einer Kegelfläche (39, 40) zusammenwirkt, die am Werkzeug (26) bzw. der Werkzeugaufnahme (8) vorgesehen ist und in einer stirnseitigen Ausnehmung (30) des Werkzeuges (26) bzw. der Werkzeugaufnahme (8) liegt.

2. Spannvorrichtung nach Anspruch 1,
dadurch gekennzeichnet, daß der Spann- und Zentrierteil (18) über einen verjüngten Hals (14) mit einem Grundkörper (15) des Zugteiles (7) verbunden ist.

3. Spannvorrichtung nach Anspruch 1 oder 2,
dadurch gekennzeichnet, daß die Kegelfläche (39, 40) durch zwei Teilkegelflächen gebildet ist, die auf dem Mantel eines gedachten Kegels liegen.

4. Spannvorrichtung nach einem der Ansprüche 1 bis 3,
dadurch gekennzeichnet, daß die Ausnehmung (30) quer zur Achse des Werkzeuges (26) bzw. der Werkzeugaufnahme (8) offen ist, vorzugsweise in der Stirnseite (29) des Werkzeuges (26) bzw. der Werkzeugaufnahme (8) diametral verläuft.

5. Spannvorrichtung nach Anspruch 4,
dadurch gekennzeichnet, daß sich die Ausnehmung (30) in Richtung auf die Mantelfläche (33) des Werkzeuges (26) bzw. der Werkzeugaufnahme (8) erweitert.

6. Spannvorrichtung nach einem der Ansprüche 1 bis 5,
dadurch gekennzeichnet, daß die die Ausnehmung (30) seitlich begrenzenden Seitenflächen (31, 32) entgegengesetzt zueinander teilkreisförmig gekrümmt verlaufen und vorzugsweise senkrecht in Richtung zueinander verlaufende Schulterflächen (35, 36) aufweisen, die jeweils mit einer Teilkegelfläche (39, 40) versehen sind.

7. Spannvorrichtung nach einem der Ansprüche 1 bis 6,
dadurch gekennzeichnet, daß die Ausnehmung (30) einen ebenen Boden (34) hat, dessen Abstand von der Kegelfläche (39, 40) für den Spann- und Zentrierteil (18) größer ist als die axiale Dicke des Spann- und Zentrierteiles (18).

8. Spannvorrichtung nach einem der Ansprüche 1 bis 7,
dadurch gekennzeichnet, daß die Ausnehmung (30) in der Stirnseite (29) des Werkzeuges (26) bzw. der Werkzeugaufnahme (8) schmaler ist als im Bereich ihres Bodens (34).

9. Spannvorrichtung nach einem der Ansprüche 1 bis 8,
dadurch gekennzeichnet, daß die Breite der Ausnehmung (30) in der Stirnseite (29) des Werkzeuges (26) bzw. der Werkzeugaufnahme (8) kleiner ist als der Durchmesser des Spann- und Zentrierteiles (18).

10. Spannvorrichtung nach einem der Ansprüche 1 bis 9,
dadurch gekennzeichnet, daß die Achse des die Teilkegelflächen (39, 40) aufweisenden gedachten Kegels mit der Achse des Werkzeuges (26) bzw. der Werkzeugaufnahme (8) und des Zugteiles (7) zusammenfällt.

11. Spannvorrichtung nach einem der Ansprüche 2 bis 10,
dadurch gekennzeichnet, daß der verjüngte Hals (14) schmaler ist als die Ausnehmung (30) in der Stirnseite (29) des Werkzeuges (26) bzw. der Werkzeugaufnahme (8) und vorzugsweise zwei zueinander parallele Außenseiten (21, 22) aufweist, die sich in Längsrichtung der Ausnehmung (30) erstrecken.

12. Spannvorrichtung nach einem der Ansprüche 1 bis 11,
dadurch gekennzeichnet, daß das Werkzeug (26) bzw. die Werkzeugaufnahme (8) und die Spindel (4) mit an ihren Stirnseiten (29, 42) vorgesehenen Erhöhungen (45, 43) aneinanderliegen, die vorzugsweise deckungsgleich sind und zwischen denen vorzugsweise segmentförmige Vertiefungen (47) verbleiben.

13. Spannvorrichtung nach Anspruch 12,
dadurch gekennzeichnet, daß in die Stirnseite der Erhöhungen (43) der Spindel (4) mindestens eine Druckluftbohrung (12) mündet.

14. Spannvorrichtung nach Anspruch 12 oder 13,
dadurch gekennzeichnet, daß die Erhöhungen (43, 45) radial zur Achse der Spindel (4) und des Werkzeuges (26) bzw. der Werkzeugaufnahme (8) liegen.

15. Spannvorrichtung nach einem der Ansprüche 12 bis 14,
dadurch gekennzeichnet, daß sich die Erhöhungen (45) des Werkzeuges (26) bzw. der Werkzeugaufnahme (8) etwa vom Rand der Ausnehmung (30) bis zur Mantelfläche (33) des Werkzeuges (26) bzw. der Werkzeugaufnahme (8) erstrecken.

16. Spannvorrichtung nach einem der Ansprüche 1 bis 15,
dadurch gekennzeichnet, daß in die kegelförmige Spannfläche (19) des Spann- und Zentrierteiles (18) Druckluftbohrungen (11) münden.

17. Spannvorrichtung nach einem der Ansprüche 1 bis 16,
dadurch gekennzeichnet, daß das Werkzeug (26) bzw. die Werkzeugaufnahme (8) über wenigstens einen Mitnehmer (50) in Drehrichtung formschlüssig mit der Spindel (4) verbunden ist, der vorzugsweise axial verschiebbar in der Spindel (4) gelagert und vorzugsweise mit dem Zugteil (7) antriebsverbunden ist.

18. Spannvorrichtung nach Anspruch 17,
dadurch gekennzeichnet, daß der Mitnehmer (50) gegenläufig zum Zugteil (7) verschiebbar ist, das vorzugsweise eine Verzahnung (57) aufweist, in die ein in der Spindel (4) gelagertes Zahnrad (26) eingreift, das mit einer Verzahnung (55) des Mitnehmers (50) in Eingriff steht.

19. Spannvorrichtung nach Anspruch 17 oder 18,
dadurch gekennzeichnet, daß der Mitnehmer (50) während des Wechselvorganges verdeckt in der Spindel (4) liegt.

20. Spannvorrichtung nach einem der Ansprüche 17 bis 19,
dadurch gekennzeichnet, daß das Werkzeug (26) bzw. die Werkzeugaufnahme (8) in der Stirnseite (29) eine zur Mantelfläche (33) offene Nut (51) aufweist, deren von der Mantelfläche (33) abgewandte Seitenwand (59) vorzugsweise entsprechend der Umrißform des in die Nut (51) eingreifenden Teils des Mitnehmers (50) verläuft.
